# EUROPEAN PATENT SPECIFICATION

(11) **EP 1 232 827 B1**
(45) Date of publication and mention of the grant of the patent: **13.12.2006**
(21) Application number: 01309194.7
(22) Date of filing: 30.10.2001
(51) Int. Cl.: B23K 10/00, H05H 1/26, H05H 1/28, H05H 1/34

(54) **Improved gas flow for plasma arc torch**
Lichtbogen-Plasmabrenner mit verbesserter Gasströmung
Torche à arc de plasma avec courant de gaz amélioré

(30) Priority: 30.01.2001 US 772652
(43) Date of publication of application: 21.08.2002
(73) Proprietor: THE ESAB GROUP, INC., Florence, South Carolina 29501-0545 (US)
(72) Inventor: Severance, Wayne Stanley, Jr., Darlington, South Carolina 29532-7425 (US)
(74) Representative: MacDougall, Donald Carmichael

(56) References cited:
- EP-A- 0 186 253
- US-A- 4 580 032
- US-A- 4 590 354
- US-A- 4 914 271
- US-A- 5 681 489
- US-A- 5 726 415

## Description

The present invention relates to plasma arc torches where, a gas flow for supporting an electric arc in a plasma arc torch is supplied.

### BACKGROUND OF THE INVENTION

Plasma arc torches are commonly used for the working of metal, including cutting, welding, surface treatment, melting, and annealing. Such torches include an electrode which supports an arc which extends from the electrode to a workpiece in the transferred arc mode of operation. It is also conventional to surround the arc with a swirling vortex flow of gas, and in some torch designs it is conventional to also envelop the gas and arc in a swirling jet of water.

The electrode used in conventional torches of the described type typically comprises an elongate tubular member composed of a material of high thermal conductivity, such as copper or a copper alloy. The forward or discharge end of the tubular electrode includes a bottom end wall having an emissive element embedded therein, which supports the arc. The emissive element is composed of a material which has a relatively low work function, which is defined in the art as the potential step, measured in electron volts (ev), which permits thermionic emission from the surface of a metal at a given temperature. In view of this low work function, the element is thus capable of readily emitting electrons when an electrical potential is applied thereto. Commonly used emissive materials include hafnium, zirconium, tungsten, and alloys thereof. A nozzle surrounds the discharge end of the electrode and provides a pathway for directing the arc towards the workpiece.

A problem associated with torches of the type described above is the short service life of the electrode, particularly when the torch is used with an oxidizing gas, such as oxygen or air. More particularly, the emissive elements of these torches often erode below the surface of the copper holder at the discharge end. Additionally, the gas tends to rapidly oxidize the copper of the electrode that surrounds the emissive element and, as the copper oxidizes, its work function decreases. As a result, a point is reached at which the oxidized copper surrounding the emissive element begins to support the arc, rather than the emissive element. When this happens, the copper oxide and the supporting copper melt, resulting in early destruction and failure of the electrode.

In order to prevent or reduce the formation of oxidized copper surrounding the emissive element, particularly for air cooled plasma arc torches, the air is circulated rapidly about the electrode to improve heat transfer from the arc away from the electrode. A conventional method for the air to be distributed in an air cooled plasma arc torch is for the air to first be used in some fashion to cool the electrode and then to be split into separate primary and secondary flows. Typically, this is accomplished by means of a gas baffle positioned between the nozzle and the electrode for splitting the flow into the primary or cutting gas flow and the secondary or shield gas flow, which helps maintain the position of the arc. More specifically, the primary flow of the gas passes through holes in the gas baffle into a chamber defined by a primary nozzle and the electrode and is ejected by the primary nozzle, while the rest of the gas is directed out a secondary nozzle so as to surround the primary gas flow. Disadvantageously, the baffle splits the gas into the primary flow and secondary flow before the nozzle chamber, which limits the ability of the torch to transfer heat from the electrode and can reduce the speed of the torch, as discussed below.

Baffles also add to the cost and complexity of manufacturing and assembling the torch. More specifically, baffles are subject to failure and can occasionally be inadvertently omitted by an operator during assembly of the torch. Furthermore, baffles tend to become brittle over time and eventually develop cracks, which often lead to catastrophic failure unless the baffles are frequently replaced. Even when replaced on a regular preventative maintenance cycle, which adds further cost to the torch, human error may lead to the baffles being left out during assembly of the torch, which can damage the torch or cause the torch to operate incorrectly. In addition, baffles can also permit the arc to "jump" or track across the baffle, which can also damage the torch. Specifically, the use of baffles can result in a convoluted set of passages in and around the electrode through which air can pass, which can lead to migration of the arc through the passages. Although attempts have been made to insulate the labyrinth of passages through the torch, arcing through the often damp air in the passages has been a problem with conventional torches.

Another problem with conventional torches is the lack of cooling achieved by the gas due to splitting the gas into different flows before the gas has circulated along substantially the entire length of the electrode. In particular, many torches split the gas into the primary and secondary flows at a location intermediate the opposite ends of the electrode. This is considered necessary in order to limit the pressure realized in the nozzle chamber while providing adequate flow for cooling. In order to cool the torch while avoiding failure of the torch due to excessive nozzle pressure, often as much as 70-90% of the total gas supplied to a conventional torch is diverted away from the nozzle chamber to other outlets, which direct the secondary flow. As a result, only a portion of the total gas supplied to the torch is available for cooling the electrode along substantially the entire length of the electrode, and even less gas pressure than is optimal may be available at the exit end of the nozzle as a primary gas flow. Accordingly, conventional torches have limited cutting speeds, which adds time and expense to the torch operation. It is desirable to provide a greater nozzle chamber pressure so that higher cutting speeds can be realized. This is a difficult proposition, however, due to the limitations of conventional torches as described, and for the fact that most manufacturing locations and welding shops use standard "shop" air pressure that cannot be increased in order to increase the gas pressure in the nozzle chamber.

Several patents discuss plasma arc torches having various flow patterns. For example, U.S. Patent No. 5,726,415 to Luo et al. discloses a plasma arc torch with an electrode having an metallic holder with an emissive element positioned at a discharge end thereof. The torch also includes a nozzle, which in combination with the holder defines an annular gas chamber therebetween for directing a cooling gas about the electrode. The nozzle also defines a cylindrical exhaust port for directing a primary gas flow towards a workpiece, and bleed ports positioned in the rear portion of the nozzle for venting a majority of the gas through bores for use as a shield or secondary gas flow. In operation, the bleed ports bleed approximately 90% of the gas, thus leaving 10% of the gas to cool the full length of the electrode and exit the cylindrical exhaust port as the primary gas flow towards the workpiece. Thus, only a fraction of the gas entering the torch travels substantially the length of the electrode, which decreases the cooling capability of the gas.

U.S. Patent No. 4,558,201 to Hatch discloses a plasma arc torch having a reversible electrode that has both a forward insert and a rearward insert positioned at opposing ends thereof. The electrode defines a plurality of passageways for directing the gas towards a workpiece. In particular, gas is directed through channels around the exterior of the electrode as well as through a central passage extending along the longitudinal axis of the electrode. As the gas reaches the midpoint of the electrode, however, the gas is split into a primary flow and a secondary flow, wherein the secondary flow is directed away from the electrode around an insulator to a front portion of a chamber defined by a nozzle and the insulator. The primary flow is directed out a central orifice in the nozzle along with the electrical arc extending from the forward emissive insert to the workpiece. As in the Luo '415 patent, the gas flow is split into a primary flow and a secondary flow before the gas has traveled substantially the length of the electrode, which decreases the heat transfer capability of the gas and provides less gas pressure in the nozzle chamber, which decreases the efficiency of the torch.

U.S. Patent No. 4,590,354 to Marhic discloses a plasma torch having a hollow torch body whose interior is connected to a source of plasma producing gas. Inside the body is a hollow electrode and a nozzle. Plasma producing gas flows in a bore of the electrode and issues tangentially from the bore through an opening or openings. After leaving the electrode, the gas is divided into two streams, one that flows out through internal grooves in the tool body and the other that flows downwardly inside the nozzle to form the plasma.

U.S. Patents No. 4,580,032 and No. 5,681,489 to Carhuff describe a plasma torch that includes a safety control. Plasma gas flows from a bore to a central cavity via gas exit passages. From the central cavity, the gas either passes out of the torch via slots between a nozzle and a ledge in the heat shield or passes through swirl holes, down into the nozzle and out through a constricting orifice.

Thus, there is a need to provide sufficient gas flow to the torch in order to transfer heat away from the arc and the torch, but without sacrificing cutting speed or pressure realized in the nozzle chamber. It is also desirable to provide a torch with simple assembly and without using baffles to direct a flow of gas from the electrode to the nozzle chamber.

### SUMMARY OF THE INVENTION

The above and other objects and advantages of the present invention are achieved by a plasma arc torch that directs a flow of gas along substantially the length of the electrode such that more gas is used to cool the torch compared to conventional torches. The torch of the present invention includes an electrode defining a plurality of openings positioned proximate the front end of the electrode such that all of the gas supplied to the torch is directed through the openings into a chamber defined by the electrode and the nozzle. In this regard, the gas pressure in the nozzle chamber is increased compared to conventional torches, which allows the torch of the present invention to have a faster cutting speed. Advantageously, the torch of the present invention utilizes the openings in the electrode itself to direct the flow of gas, and not baffles as in conventional torches.

In particular, a plasma arc torch according to one embodiment of the present invention includes an electrode having an upper tubular member defining an internal bore and a lower cup-shaped member or holder defining a central passageway in fluid communication with the internal bore of the upper tubular member. The front end of the holder defines a cavity for receiving an emissive insert, and the rear end defines the central passageway. The holder also defines a plurality of side openings that are in fluid communication with the central passageway. In one embodiment, the side openings are arranged to impart a swirling motion to the gas flowing therethrough.

The plasma arc torch also includes a nozzle positioned proximate the front end of the holder such that a nozzle chamber is defined therebetween. The nozzle defines a central bore for discharging a primary flow of gas towards a workpiece, and in one embodiment also defines a plurality of secondary openings for creating a secondary flow of gas therethrough. Advantageously, the openings defined in the nozzle and holder eliminate the need for separate baffles for separating the gas flow into the primary and secondary flows.

Safety items are also a part of the torch of the present invention. More specifically, in one embodiment a ball valve assembly is located in the internal bore of the upper tubular member of the electrode for regulating gas flow through the electrode. In this regard, the ball valve assembly acts to protect the torch from damage if a user attempts to operate the torch with portions of the torch missing, such as the holder of the electrode, by cutting off the gas flow through the torch. The plasma arc torch of the present invention can also include a pressure switch in fluid communication with the nozzle chamber. The pressure switch can disable the torch if the gas pressure in the torch, such as in the nozzle chamber, is below a predetermined value, which may occur if the torch is assembled incorrectly or if the torch is damaged.

To improve the ability of the torch to transfer heat from the arc, the flow of gas is directed through the central passageway a distance more than 1/2 the length of the holder before being directed through the side openings thereof. As such, more gas is available for transferring heat from the arc and electrode away from the torch.

As mentioned above, the flow of gas can also be directed to certain safety devices, such as the flow-regulating ball valve assembly, or to the pressure switch that is in fluid communication with the nozzle chamber. Advantageously, the torch is disabled if certain conditions occur, such as having a gas pressure in the torch that is below a predetermined value.

Accordingly, the present invention provides a plasma arc torch that overcomes the disadvantages of conventional torches without sacrificing the cutting speed of the torch or the pressure realized in the nozzle chamber. Advantageously, the torch of the present invention avoid the use of baffles to direct the flow of gas from the electrode to a primary flow and a secondary flow, which improves the assembly, reliability, and cost of the torch.

### BRIEF DESCRIPTION OF THE DRAWINGS

Having thus described the invention in general terms, reference will now be made to the accompanying drawings, which are not necessarily drawn to scale, wherein:
Figure 1 is a cross-sectional view of a front portion of a plasma arc torch according to the present invention;
Figure 2 is a detailed cross-sectional view of a portion of an electrode and a nozzle according to one embodiment of the present invention; and
Figure 3 is a detailed cross-sectional view taken along lines 3-3 of Figure 2 according to one embodiment of the present invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art as defined by the appended claims. Like numbers refer to like elements throughout.

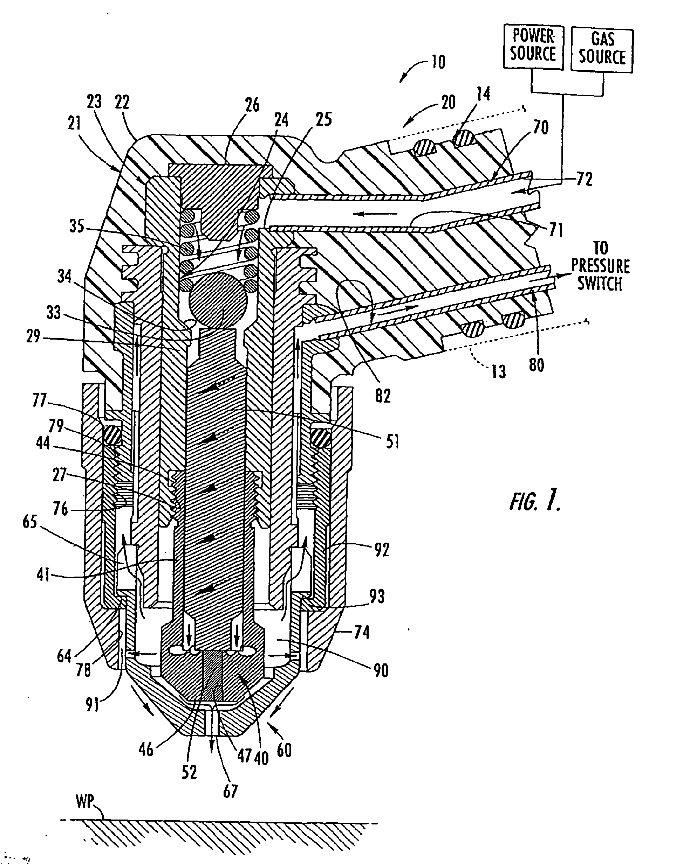

Referring to the accompanying drawings, Figure 1 illustrates a preferred embodiment of a plasma arc torch, indicated generally at **10,** according to the invention. The torch **10** comprises a torch body **20** and electrode **40** mounted within the torch body, and a handle **13** secured to the torch body, such as by press fitting over a plurality of bushings **14.** The torch **10** further comprises a supply line **70** for directing a pressurized flow of gas through the torch body **20** and directing electrical power to the electrode **40.** In one embodiment, the torch **10** also includes a detecting device **80** for sensing the gas pressure in the torch body **20** and for disabling the flow of electrical current to the electrode **40** in accordance with the present invention.

As shown in Figure 1, the torch body **20** comprises a generally cylindrical head portion **21** defining a discharge axis. The head portion **21** includes a housing **22** surrounding a portion of the electrode **40** along the discharge axis. The housing **22** is typically made of a hard, heat-resistant material, such as thermoset plastic or epoxy compound, which protects the components of the torch from the high heat generated during plasma arc cutting. The electrode **40** includes an upper tubular member **23** and a lower cup-shaped member or holder **41.** The upper tubular member **23** defines an internal bore **24** which is coaxially aligned with the discharge axis. In one embodiment, the internal bore **24** includes a valve seat **34,** as discussed more fully below. The upper tubular member **23** is made of an electrically conductive material, preferably copper or copper alloy, such that the upper tubular member conducts an electrical current to other portions of the electrode **40.** The upper tubular member **23** also defines a passageway **25** such that the internal bore **24** is in fluid communication with the supply line **70.** In addition, a cap **26** is secured to the top of the upper tubular member **23** for directing gas along the discharge axis. In one embodiment, the upper tubular member **23** includes an internally threaded portion **27.**

The supply line **70** comprises a hollow conduit **72** defining a gas passageway and is positioned within the torch body **20**. The conduit **72** originates at a source of pressurized gas and terminates in the passageway **25** of the upper tubular member **23** of the electrode **40** such that the source of pressurized gas is in fluid communication with the internal bore **24.** Supply line **70** further comprises a power supply cable **71** electrically connected to the conduit **72** and a power source such that the power source is electrically connected to the electrode **40.**

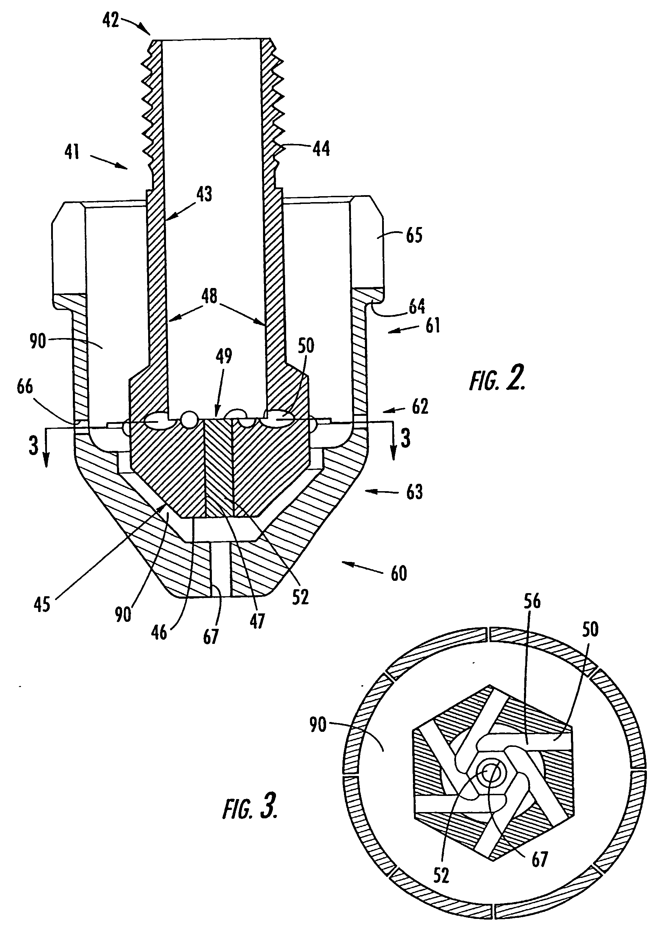

Figure 2 illustrates one embodiment of the holder **41** of the electrode **40.** In particular, the holder **41** is made of an electrically conductive material, preferably copper or copper alloy. The holder **41** has a rear end **42** defining a central passageway **43** that is in fluid communication with the internal bore **24** of the upper tubular member **23.** In one embodiment, the rear end **42** includes a plurality of external threads **44** suitable for threadably engaging the internally threaded portion **27** of the upper tubular member **23.** The holder **41** also includes a front end **45** having a front face **46** and defining a front cavity or opening **47** therein. The holder **41** includes side walls **48** and a transverse end wall **49** that define the central passageway **43.**

The holder **41** also defines a plurality of openings **50** that are positioned in the side walls **48** adjacent the end wall **49.** Advantageously, the openings **50** are located at a position less than one-half the length of the holder **41** from the front face **46** thereof. In a preferred embodiment, the openings **50** are located proximate the end wall **49** of the holder **41** at the forward end of the central passageway **43** and, according to one embodiment, are directed non-radially so that gas passing through the openings is swirled about the holder **41.** In one embodiment shown in Figure 3, the end wall **49** defines a plurality of channels **56** corresponding to the openings **50** for directing the gas from the central passageway **43** through the openings. As discussed below, gas is directed through the supply line **70** and into the internal bore **24** of the upper tubular member **23.** The gas is then directed into the central passageway **43** of the holder **41** towards the openings **50** so as to cool the electrode while the torch **10** is in use. To further the cooling action of the gas, a channeled valve pin **51** can be positioned in the internal bore **24** and central passageway **43** for increasing the velocity of the gas therein, such as by swirling the gas. In this manner, the gas receives more contact with the electrode **40,** which thereby increases the heat transfer between the electrode and the gas. The pin **51** can also be used as a safety device, as discussed more fully below.

In one embodiment, the front end **45** of the holder **41** includes an emissive element **52** disposed in the opening **47.** The emissive element **52** acts as the cathode terminal for an electrical arc extending from the front end of the electrode **40** in the direction of a workpiece **WP,** as discussed more fully below. For example, an electrode comprising an emissive element is disclosed in U.S. Patent No. 5,023,425 to Severance, Jr., and assigned to the assignee of the present invention. The emissive element **52** is composed of a material which has a relatively low work function, defined in the art as the potential step, measured in electron volts, that permits thermionic emission from the surface of a metal at a given temperature. In view of its low work function, the emissive element readily emits electrons in the presence of an electrical potential. Commonly used insert materials include hafnium, zirconium, tungsten, and alloys thereof.

In addition, a relatively non-emissive separator (not shown) may also be positioned about the emissive element **52** at the front end **45** of the holder **41.** In particular, the separator is positioned about the emissive element **52** in the opening **47** of the electrode. The separator is composed of a metallic material having a work function which is greater than that of the material of the holder **41,** and also greater than that of the material of the emissive element **52.** In this regard, it is preferred that the separator be composed of a metallic material having a relatively high work function. Several metals and alloys are usable for the non-emissive separator of the present invention, such as silver, gold, platinum, rhodium, iridium, palladium, nickel. The emissive element **52,** separator, and holder **41** are flush with one another at the front face **46** of the holder.

As shown in Figure 2, the torch **10** also includes a nozzle **60** positioned proximate the holder **41** of the electrode **40.** The nozzle **60** includes an upper portion **61,** a middle portion **62,** and a frustoconical lower portion **63.** The nozzle **60** is positioned about the holder **41** such that a chamber **90** is defined therebetween. The upper portion **61** of the nozzle **60** defines a plurality of slots **65** through which air pressure form the nozzle chamber **90** is communicated to the detecting device **80.** The middle portion **62** of the nozzle forms a shoulder **64** with the upper portion **61** and defines a plurality of openings **66** therethrough such that the nozzle chamber **90** is in fluid communication with a shield or secondary gas flow port **91,** which is defined between the nozzle **60** and an outer heat shield **74** and is in fluid communication with the ambient atmosphere (see Figure 1). The lower portion **63** of the nozzle **60** defines a central bore **67** for discharging gas from the nozzle chamber **90** toward the workpiece **WP** located adjacent the nozzle.

The nozzle **60** is held in place about the holder **41** by the outer heat shield **74.** In one embodiment, the heat shield **74,** which is preferably formed of an electrically insulating material, includes a metallic sleeve **92** having a transverse portion **93** at one end and threaded portion **76** at the other end. The threaded portion **76** threadably engages a threaded surface **79** of the housing **22,** and the transverse portion **93** engages the shoulder **64** provided on the nozzle **60** to hold the nozzle in place about the holder **41** when the heat shield **74** is secured on the torch body **20.** Once installed, the heat shield **74** also defines a central opening **78** therethrough adjacent the nozzle **60** and coaxially aligned with the discharge axis such that the shield gas port flow **91** is defined between the heat shield and nozzle. A resilient O-ring **77** is positioned between the housing **22** and the heat shield **74** to protect the electrode **40** and nozzle **60** from external contaminants and to seal the torch body **20** when the heat shield is properly secured thereto.

The pressure detecting device **80** comprises a hollow conduit **82** defining a gas passageway within the torch body **20.** More specifically, conduit **82** originates in the head portion **21** of torch body **20,** and terminates at a pressure switch (not shown) such that the pressure switch is in fluid communication with the internal bore **24** of the upper tubular member **23** and the central passageway **43** of the holder **41** via the side openings **50** and the slots **65.** The conduit **82** and pressure switch of this type are described in U.S. Patent No. 5,681,489, which is assigned to the assignee of the present invention.

In operation, when an operator presses a control switch (not shown), a low voltage electrical circuit in the power source is closed. The electrical circuit opens a solenoid positioned in the power source such that the supply line **70** directs a singular, pressurized flow of gas through the conduit **72** to the head portion **21** and internal bore **24** of the upper tubular member **23.** The pressurized gas may be any gas capable of forming a plasma flow, but preferably is air, oxygen or nitrogen. The gas is then directed to the central passageway **43** defined in the holder **41.** Advantageously, all of the gas supplied into the central passageway **43** exits through the openings **50** positioned adjacent the end wall **49** of the holder **41** and into the nozzle chamber **90.** Thus, the gas travels substantially the length of the electrode **40,** such as to a position less than one-half the length of the electrode **40,** and preferably one-half the length of the holder **41,** measured along the longitudinal axis from the front face **46.** As such, the torch of the present invention provides improved cooling to the electrode compared to conventional torches. As noted above, the openings **50** are preferably in a tangential formation, as shown in Figure 3. This arrangement creates a swirling pattern about the front end **45** as the gas enters the nozzle chamber **90.**

After the gas arrives in the nozzle chamber **90** via the openings **50,** a primary flow portion of the gas is directed to the central bore **67** of the nozzle **60.** In addition, the opening **66** defined in the middle portion **62** of the nozzle **60** allow a secondary flow portion of the gas to escape therethrough to the shield gas flow port **91.** Thus, all of the gas present in the nozzle chamber **90** enters the nozzle chamber through the openings **50** in the holder **41.** In this manner, higher nozzle pressures can be achieved, which allows for a higher cutting speed of the torch **10.** Moreover, the gas is in contact with the electrode **40** for a longer period of time compared to conventional torches, which improves cooling of the torch.

As mentioned above, the flow of gas is initiated by an operator pressing a control switch. In order to supply electricity to the electrode, sufficient gas pressure must be present in the torch. More specifically, when the outer heat shield **74** is properly secured about the nozzle **60** on the torch body **20,** the pressure detecting device **80** senses the gas pressure in the torch body, such as in the nozzle chamber **90.** According to one embodiment of the present invention, the pressure in the nozzle chamber **90** should be at least approximately 2,07 bar (30 psi) using conventional "shop" air, which is about 5,17 bar (75 psi). If the device **80** senses sufficient gas pressure in the nozzle chamber **90** for a predetermined time, typically about three seconds, the detecting device closes, or causes to be closed, an electrical circuit to permit the power source to supply electrical current to the torch **10.** In other words, as long as there is sufficient gas pressure in the nozzle chamber **90,** which can be achieved by maintaining a predetermined gas flow rate through a properly assembled torch, the power source will supply electrical current to the electrode **40.**

If, however, there is insufficient gas pressure in the torch body **20,** such as when the nozzle **60** is removed or misaligned, or if the heat shield **74** is removed, the pressurized gas flows through the openings **50** and primarily out the front of the torch to the atmosphere, so that substantially no gas enters the conduit **82** of the pressure detecting device **80.** As a result, sufficient pressure of the gas is not sensed at the pressure switch via the conduit **82,** which ceases electrical current to the electrode **40.** In one embodiment, the torch **10** also includes a ball valve assembly capable of regulating the gas through the torch. In particular, the assembly includes a non-conductive ball **33** of spherical geometry that is positioned in the internal bore **24** of the upper tubular member **23** and is biased by a bias member **35,** such as a spring, against the valve seat **34**.

The valve pin **51** is capable of moving and holding the ball **33** away from the valve seat **34** when the holder **41** is properly installed and engaged with the upper tubular member **23.** In particular, the ball **33** serves as a "parts in place" feature to protect the torch body **20** from damage should the holder **41** or valve pin **51** be left out. If either is omitted, the ball **33** remains against the valve seat **34,** which prevents the gas from flowing through the internal bore **24** to the central passageway **43.** As a result, the lack of gas flow prevents a pressure signal from being communicated to the pressure switch via the conduit **82,** which must be satisfied for the power source to deliver current to the torch **10.** Such a feature is described in U.S. Patent No. 4,580,032 to Carkhuff, which is assigned to the assignee of the present invention.

Thus, the present invention provides a plasma arc torch and method of directing a flow of gas in the torch such that greater cooling of the electrode is achieved and increased cutting speeds can be realized compared to conventional torches. In particular, the electrode of the present invention provides a holder defining a plurality of openings proximate the front end thereof for directing all of the gas into the nozzle chamber before splitting the gas into primary and secondary flows. As such, the gas is in contact with the electrode along substantially the length of the electrode before it is split, which improves cooling of the electrode. Furthermore, gas baffles are not used in assembly of the torch to separate the gas into primary and secondary flows. In this regard, the assembly time and cost of the torch are reduced, while providing an increase in nozzle chamber pressure and thus cutting speed of the torch.

Many modifications and other embodiments of the invention will come to mind to one skilled in the art to which this invention pertains having the benefit of the teachings presented in the foregoing descriptions and the associated drawings. For example, the sensing device and other safety features of the present invention are not mandatory in order to benefit from the teachings presented herein, but are recommended for operator safety and torch life. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A plasma arc torch (10), comprising :
an electrode (40) including an upper tubular member (23) defining an internal bore (24) therethrough and a metallic holder (41) having a front end (45) and a rear end (42) along a longitudinal axis, the front end (45) having a front face (46) defining a front cavity (47) having at least an emissive element (52) positioned therein, the rear end (42) defining a central passageway (43) in fluid communication with the internal bore (24) for directing gas from the rear end (42) to the front end (45) of the holder (41), the holder (41) further defining a plurality of side openings (50) positioned proximate the front end (45) of the holder (41) that are in fluid communication with the central passageway (43);
a nozzle (60) positioned proximate the front end (45) of the holder (41) and defining a nozzle chamber (90) therebetween, said nozzle (60) defining a central bore (67) for discharging a primary flow of gas from the nozzle chamber (90) toward a workpiece (WP) located adjacent the nozzle;
an electrical supply for creating an arc extending from the emissive element (52) of said electrode (40) through the central bore (67) and to the workpiece (WP); and
a gas supply line (70) through which all gas used by the torch is supplied, the gas supply line (70) directing all of the gas to the central passageway (43) of said electrode (40), wherein all of the gas is directed to the nozzle chamber (90) from the central passageway (43) through the side openings (50) defined by the holder (41); **characterized in that**
the nozzle (60) includes a tubular wall (62) surrounding the nozzle chamber (90), the tubular wall defining secondary openings (66) therethrough for diverting a portion of the gas flow in the nozzle chamber (90) through said secondary openings (66) for use as a secondary gas flow, whereby the nozzle (60) governs the division of the gas flow into the primary and secondary gas flows.

2. A plasma arc torch according to Claim 1, further comprising an outer heat shield (74) surrounding the nozzle (60) such that a space (91) is defined between the outer heat shield (76) and the nozzle (60) for receiving the secondary gas flow after the secondary gas flow has passed through the secondary openings (66) in the nozzle (60).

3. A plasma arc torch (10) according to Claim 1, further comprising a ball valve assembly located in the internal bore of the upper tubular member, said ball valve assembly capable of regulating the gas through the torch.

4. A plasma arc torch according to Claim 1, further comprising a pressure detecting device (80) in fluid communication with the nozzle chamber, said pressure detecting device (80) disabling the torch if gas pressure in the nozzle chamber (90) is below a predetermined value.

5. A plasma arc torch according to Claim 1, wherein the side openings (50) in the holder (41) are arranged to impart a swirling motion to the gas flowing into the nozzle chamber (90).

6. A plasma arc torch according to Claim 1, wherein the side openings (50) defined by the holder (41) are located at a position less than 1/2 the length of the holder (41) along the longitudinal axis from the front face (46) of the holder.

## Patentansprüche

1. Lichtbogen-Plasmabrenner (10), umfassend:
eine Elektrode (40) mit einem oberen rohrförmigen Element (23), das eine Innenbohrung (24) durch es hindurch definiert, und einem metallischen Halter (41), der ein vorderes Ende (45) und ein hinteres Ende (42) entlang einer Längsachse hat, wobei das vordere Ende (45) eine Vorderseite (46) hat, die einen vorderen Hohlraum (47) definiert, in dem wenigstens ein ausstrahlendes Element (52) positioniert ist, wobei das hintere Ende (42) einen zentralen Durchgang (43) in Fluidkommunikation mit der Innenbohrung (24) zum Leiten von Gas vom hinteren Ende (42) zum vorderen Ende (45) des Halters (41) definiert, wobei der Halter ferner eine Vielzahl von nahe dem vorderen Ende (45) des Halters (41) positionierten seitlichen Öffnungen (50) definiert, die mit dem zentralen Durchgang (43) in Fluidkommunikation stehen;
eine Düse (60), die nahe dem vorderen Ende (45) des Halters (41) positioniert ist und dazwischen eine Düsenkammer (90) definiert, wobei die Düse (60) eine zentrale Bohrung (67) zum Auslassen eines primären Gasstroms aus der Düsenkammer (90) in Richtung auf ein neben der Düse befindliches Werkstück (WP) definiert;
eine elektrische Speisung zum Erzeugen eines Lichtbogens, der von dem ausstrahlenden Element (52) der Elektrode (40) durch die zentrale Bohrung (67) und zum Werkstück (WP) verläuft; und
eine Gasversorgungsleitung (70), durch die sämtliches von dem Brenner benutztes Gas zugeführt wird, wobei die Gasversorgungsleitung (70) das gesamte Gas zum zentralen Durchgang (43) der Elektrode (40) leitet, wobei das gesamte Gas von dem zentralen Durchgang (43) durch die vom Halter (41) definierten seitlichen Öffnungen (50) zur Düsenkammer (90) geleitet wird;
**dadurch gekennzeichnet, dass** die Düse (60) eine die Düsenkammer (90) umgebende rohrförmige Wand (62) aufweist, wobei die rohrförmige Wand sekundäre Öffnungen (66) durch sie hindurch definiert zum Umleiten eines Teils des Gasstroms in der Düsenkammer (90) durch die sekundären Öffnungen (66) zur Verwendung als sekundären Gasstrom, wodurch die Düse (60) die Trennung des Gasstroms in den primären und den sekundären Gasstrom regelt.

2. Lichtbogen-Plasmabrenner nach Anspruch 1, ferner umfassend einen die Düse (60) umgebenden äußeren Hitzeschild (74), so dass zwischen dem äußeren Hitzeschild (74) und der Düse (60) ein Zwischenraum (91) definiert ist zum Aufnehmen des sekundären Gasstroms, nachdem der sekundäre Gasstrom durch die sekundären Öffnungen (66) in der Düse (60) hindurchgeströmt ist.

3. Lichtbogen-Plasmabrenner (10) nach Anspruch 1, ferner umfassend eine Kugelhahnbaugruppe in der Innenbohrung des oberen rohrförmigen Elements, wobei die Kugelhahnbaugruppe das Gas durch den Brenner regulieren kann.

4. Lichtbogen-Plamabrenner nach Anspruch 1, ferner umfassend eine mit der Düsenkammer in Fluidkommunikation stehende Druckerfassungsvorrichtung (80), wobei die Druckerfassungsvorrichtung (80) den Brenner deaktiviert, wenn der Gasdruck in der Düsenkammer (90) unter einem vorbestimmten Wert liegt.

5. Lichtbogen-Plasmabrenner nach Anspruch 1, bei dem die seitlichen Öffnungen (50) im Halter (41) angeordnet sind, um dem in die Düsenkammer (90) strömenden Gas eine wirbelnde Bewegung zu verleihen.

6. Lichtbogen-Plasmabrenner nach Anspruch 1, bei dem die vom Halter (41) definierten seitlichen Öffnungen (50) sich an einer Position auf weniger als der halben Länge des Halters (41) entlang der Längsachse ab der Vorderseite (46) des Halters befinden.

## Revendications

1. Torche à arc plasma (10), comprenant:
une électrode (40) comprenant un élément tubulaire supérieur (23) définissant un alésage interne (24) à travers celui-ci et un support métallique (41) comportant une extrémité avant (45) et une extrémité arrière (42) le long d'un axe longitudinal, l'extrémité avant (45) présentant une face avant (46) définissant une cavité avant (47) ayant au moins un élément émissif (52) positionné en son sein, l'extrémité arrière (42) définissant un passage central (43) en communication fluidique avec l'alésage interne (24) pour diriger un gaz de l'extrémité arrière (42) vers l'extrémité avant (45) du support (41), le support (41) définissant en outre une pluralité d'ouvertures latérales (50) positionnées à proximité de l'extrémité avant (45) du support (41) qui sont en communication fluidique avec le passage central (43);
une buse (60) positionnée à proximité de l'extrémité avant (45) du support (41) et définissant une chambre de buse (90) entre elles, ladite buse (60) définissant un alésage central (67) pour décharger un écoulement primaire de gaz de la chambre de buse (90) vers une pièce à travailler (WP) située à proximité de la buse;
une alimentation électrique pour créer un arc s'étendant de l'élément émissif (52) de ladite électrode (40) à travers l'alésage central (67) et vers la pièce à travailler (WP); et
une ligne d'alimentation en gaz (70) à travers laquelle tout le gaz utilisé par la torche est délivré, la ligne d'alimentation en gaz (70) dirigeant tout le gaz vers le passage central (43) de ladite électrode (40), dans laquelle tout le gaz est dirigé vers la chambre de buse (90) à partir du passage central (43) à travers les ouvertures latérales (50) définies par le support (41);
**caractérisée en ce que**
la buse (60) comprend une paroi tubulaire (62) entourant la chambre de buse (90), la paroi tubulaire définissant des ouvertures secondaires (66) à travers celle-ci pour dévier une partie de l'écoulement de gaz dans la chambre de buse (90) à travers lesdites ouvertures secondaires (66) pour une utilisation en tant qu'écoulement de gaz secondaire, la buse (60) régissant la division de l'écoulement de gaz en écoulements de gaz primaire et secondaire.

2. Torche à arc plasma selon la revendication 1, comprenant en outre un écran thermique extérieur (74) entourant la buse (60) de sorte qu'un espace (91) est défini entre l'écran thermique extérieur (74) et la buse (60) pour recevoir l'écoulement de gaz secondaire après que l'écoulement de gaz secondaire a traversé les ouvertures secondaires (66) dans la buse (60).

3. Torche à arc plasma (10) selon la revendication 1, comprenant en outre un ensemble formant clapet à bille situé dans l'alésage interne de l'élément tubulaire supérieur, ledit ensemble formant clapet à bille étant capable de réguler le gaz à travers la torche.

4. Torche à arc plasma selon la revendication 1, comprenant en outre un dispositif de détection de pression (80) en communication fluidique avec la chambre de buse, ledit dispositif de détection de pression (80) désactivant la torche si la pression de gaz dans la chambre de buse (90) est au-dessous d'une valeur prédéterminée.

5. Torche à arc plasma selon la revendication 1, dans laquelle les ouvertures latérales (50) dans le support (41) sont configurées pour conférer un mouvement tourbillonnant au gaz s'écoulant dans la chambre de buse (90).

6. Torche à arc plasma selon la revendication 1, dans laquelle les ouvertures latérales (50) définies par le support (41) sont situées à une position inférieure à la moitié de la longueur du support (41) le long de l'axe longitudinal depuis la face avant (46) du support.
